(19) **Europäisches Patentamt / European Patent Office / Office européen des brevets**

(11) **EP 1 303 768 B1**

(12) # EUROPÄISCHE PATENTSCHRIFT

(45) Veröffentlichungstag und Bekanntmachung des Hinweises auf die Patenterteilung:
**12.11.2008  Patentblatt 2008/46**

(21) Anmeldenummer: **01951349.8**

(22) Anmeldetag: **25.05.2001**

(51) Int Cl.:
*G01S 11/12* (2006.01)     *G01N 21/53* (2006.01)
*B60R 16/02* (2006.01)

(86) Internationale Anmeldenummer:
**PCT/DE2001/002028**

(87) Internationale Veröffentlichungsnummer:
**WO 2002/006851 (24.01.2002 Gazette 2002/04)**

(54) **VERFAHREN ZUR SICHTWEITENBESTIMMUNG**

METHOD FOR DETERMINING VISIBILITY

PROCEDE POUR DETERMINER LA DISTANCE DE VISIBILITE

(84) Benannte Vertragsstaaten:
**DE FR GB IT**

(30) Priorität: **15.07.2000   DE 10034461**

(43) Veröffentlichungstag der Anmeldung:
**23.04.2003   Patentblatt 2003/17**

(73) Patentinhaber: **ROBERT BOSCH GMBH**
**70442 Stuttgart (DE)**

(72) Erfinder:
• **PÖCHMÜLLER, Werner**
**31139 Hildesheim (DE)**

• **KUEHNLE, Goetz**
**71282 Hemmingen (DE)**

(56) Entgegenhaltungen:
**EP-A- 0 687 594        EP-A- 0 691 534**
**DE-A- 19 530 289        DE-A- 19 928 915**
**US-A- 4 216 498**

• **PATENT ABSTRACTS OF JAPAN vol. 012, no. 470 (P-798), 9. Dezember 1988 (1988-12-09) & JP 63 188741 A (HOKKAIDO KAIHATSUKIYOKU DOBOKU SHIKENJO;OTHERS: 01), 4. August 1988 (1988-08-04)**

**Beschreibung**

**Stand der Technik**

Die Bestimmung der Sichtweite in einem trüben Medium, d.h. die Bestimmung einer Entfernung, jenseits von der zwei getrennte oder unterschiedlich gefärbte Objekte für einen Betrachter nicht mehr sicher unterscheidbar sind, ist ein technisches Problem, das insbesondere bei der Steuerung von Fahrzeugen relevant ist, da die Sichtweite maßgeblich die sicher fahrbare Höchstgeschwindigkeit bestimmt. Die Vielzahl sich jährlich ereignender Unfälle unter eingeschränkter Sichtweite, z.B. bei Nebel, zeigt, daß es für einen menschlichen Fahrer sehr schwer ist, die aktuelle Sichtweite quantitativ zu erfassen und die Geschwindigkeit seines Fahrzeugs an diese Sichtweite anzupassen.

Es ist daher wünschenswert, über Verfahren zum Messen der Sichtweite zu verfügen, die z.B. in künftigen Fahrerassistenzsystemen eingesetzt werden können, um bei Überschreitung einer von der jeweils gemessenen Sichtweite abhängig festgelegten Höchstgeschwindigkeit ein Warnsignal zu liefern und so den Fahrer zu veranlassen, seine Geschwindigkeit zu drosseln. Besondere Bedeutung hat die quantitative Sichtweitebestimmung auch bei künftigen Fahrerassistenzsystemen, die dem Fahrer Teile seiner Fahraufgaben abnehmen, wie z.B. die Fahrzeugslängsführung (automatischer Gas/Bremseingriff in einem adaptiven Fahrgeschwindigkeitsregelsystem).

Prinzipiell sind zwei verschiedene Arten der Sichtweite von Interesse. Zum einen handelt es sich dabei um die objektive Sichtweite (Normsichtweite), die über die Dämpfung eines optischen Signals bei Durchdringen einer gewissen Strecke des Mediums, in dem die Sichtweite zu messen ist, gegeben ist.

Zum anderen möchte man die subjektive Sichtweite des Fahrers erfassen. Diese wird von Faktoren wie der externen Beleuchtung, Kontraste, Umgebung, der Größe von Umgebungsobjekten sowie der individuellen Sehleistung des Fahrers beeinflußt. So ist z.B. bei einer Nachtfahrt in nichtbeleuchteter Umgebung die subjektive Fahrersichtweite auf die Grenzen der Fahrzeugscheinwerferkegel begrenzt. Fährt man jedoch nachts auf einer beleuchteten Allee, so ist die Sichtweite wesentlich größer. In beiden Fällen ist die Dämpfung eines Lichtsignals in der Atmosphäre und damit die Normsichtweite gleich. Aufgrund der Vielzahl möglicher Umgebungseinflüsse sowie individueller Parameter ist die Bestimmung der subjektiven Sichtweite wesentlich schwieriger als die der objektiven Sichtweite, bzw. sie ist nur eingeschränkt möglich.

Techniken zur Messung der Normsichtweite für die Anwendung in Kraftfahrzeugen befinden sich in der Erprobung. Bei diesen handelt es sich im wesentlichen um aktive Verfahren, die nach dem Rückstreuprinzip arbeiten. Hierbei wird ein optisches Signal in das zu messende Medium ausgesendet. Mittels eines entsprechenden Sensors wird das zurückgestreute optische Signal aufgefangen und anhand einer Auswertung des zeitlichen Verlaufs des empfangenen Signals auf die Durchlässigkeit des Mediums bezüglich des ausgesendeten Signals geschlossen. Um bei einer Anwendung in einem Kraftfahrzeug eine Störung des Fahrers durch die Messung auszuschließen, muß ein optisches Signal im nahen Infrarotbereich verwendet werden.

Da aktive Verfahren grundsätzlich mit einer eigenen Lichtquelle arbeiten, sind sie auf die Bestimmung der Normsichtweite beschränkt. Eine Berücksichtigung der vom Fahrer tatsächlich wahrgenommenen Lichtverhältnisse ist ausgeschlossen. Da die vom Fahrer wahrgenommene subjektive Sichtweite nicht größer sein kann als die Normsichtweite, häufig aber wesentlich kleiner ist, sind diese Verfahren für die Anwendung in Fahrerassistenzsystemen nur sehr eingeschränkt geeignet.

Neben den erwähnten aktiven Verfahren werden auch passive Verfahren vorgeschlagen, die lediglich mit in der Umgebung bereits vorhandenem Licht arbeiten. Als Beispiel für ein solches passives Verfahren und eine Vorrichtung zu seiner Durchführung kann auf EP 0 687 594 B1 verwiesen werden. Bei dem aus dieser Schrift bekannten Verfahren wird eine Kamera zum Erzeugen eines Bildes eines Blickfeldes eingesetzt, die Zahl von schwarzen und weißen Pixeln im Bild wird mit einem Grenzwert verglichen. Ergebnis des Verfahrens ist die Aussage, daß Nebel vorliegt, wenn der Grenzwert unterschritten wird, oder daß kein Nebel vorliegt, wenn der Grenzwert überschritten wird.

Dieses bekannte Verfahren erlaubt somit lediglich eine grobe Abschätzung, eine quantitative Messung der Sichtweite ist nicht möglich, da bei der Auswertung des von der Kamera erzeugten Bildes keine Information darüber vorliegt, welche Gegenstände das Bild enthält bzw. welche Kontraste diese von Natur aus aufweisen. Das bekannte Verfahren kann daher fälschlicherweise auf das Vorhandensein von Nebel schließen, wenn das Blickfeld großenteils von Gegenständen mit geringem Kontrast ausgefüllt ist.

Aus der JP 631887741 ist ein Verfahren zur Sichtweitenbestimmung bekannt, wobei basierend auf dem Hell-Dunkel-Kontrast eines bekannten Messobjektes die Sichtweite bestimmt wird. Die Veröffentlichung "Visibility estimation from a moving vehicle using the ralph vision system" von Dean Pomerleau (1998, IEEE) offenbart ein System zur Bestimmung der Sichtweite durch Messung der Schwächung des Kontrastes zwischen einheitlichen Straßenmerkmalen in unterschiedlichen Entfernungen vor einem Fahrzeug. Aus der Europäischen Patentanmeldung EP 0 691 534 A1 ist ebenfalls ein Verfahren zur Ermittlung der Sichtweite bekannt.

**Vorteile der Erfindung**

Das Verfahren gemäß der vorliegenden Erfindung hat demgegenüber den Vorteil, daß es eine quantitative Bestimmung der Sichtweite erlaubt und unabhängig von den tatsächlichen Kontrastwerten der Objekte ist, an denen die Messung durchgeführt wird.

Diese Vorteile werden erreicht, in dem ein Kontrast an einem Objekt von wenigstens zwei Meßpositionen in unterschiedlichem Abstand von dem Objekt gemessen wird und die Änderung der gemessenen Kontrastwerte in eine Sichtweite umgerechnet wird. Wenn die Luft auf dem Weg von dem Objekt zu den zwei Meßpositionen meßbar getrübt ist, so bewirkt dies, daß in der weiter entfernten Meßposition ein geringerer Kontrast gemessen wird als in der weniger weit entfernten. Dabei ist unerwarteterweise das relative Ausmaß der Kontraständerung unabhängig von dem tatsächlichen Kontrast des Objekts, so daß in Kenntnis der Entfernungen der zwei Meßpositionen von dem Objekt eine quantitative Umrechnung der Änderung der gemessenen Kontrastwerte in eine Sichtweite möglich ist.

Einer ersten Ausgestaltung des Verfahrens zufolge wird die Entfernung des Meßgeräts von dem Objekt an jeder Meßposition absolut gemessen, vorzugsweise durch optische Verfahren wie Triangulation.

Grundsätzlich ist aber allein die Kenntnis der Differenz der Entfernungen der Meßpositionen vom Objekt für die Umrechnung ausreichend.

Wenn das erfindungsgemäße Verfahren zur Messung der Sichtweite eines Fahrers in einem fahrenden Kraftfahrzeug eingesetzt wird, kann die Differenz der Entfernungen mit dem von dem Kraftfahrzeug zwischen den zwei Meßpositionen zurückgelegten Weg gleichgesetzt werden.

Dieser von dem Kraftfahrzeug zurückgelegte Weg läßt sich in einfacher Weise anhand eines im Fahrzeug vorhandenen Geschwindigkeitssignals und einer Zeitreferenz ermitteln.

Alternativ kann der zurückgelegte Weg auch durch Messen des von einem Rad des Fahrzeugs zwischen den Meßpositionen zurückgelegten Drehwinkels ermittelt werden.

Das Objekt, dessen Kontrast gemessen wird, wird vorteilhafterweise jeweils innerhalb eines kegelförmigen Volumens mit vorgegebenem Öffnungswinkel ausgewählt, wobei das Fahrzeug sich jeweils am Scheitelpunkt des Kegels befindet und die Bewegungsrichtung des Fahrzeugs der Achse des Kegels entspricht. Der Öffnungswinkel des Kegels ergibt sich aus einem Kompromiß zwischen den Anforderungen, daß einerseits ein großer Öffnungswinkel des Kegels das Auffinden eines für die Messung gut geeigneten, kontrastreichen Objektes erleichtert, das andererseits aber die Genauigkeit der Messung durch Parallaxenfehler um so weniger beeinträchtigt wird, je näher das ausgewählte Objekt an der Achse des Kegels liegt.

Da für den Fahrer eines Kraftfahrzeugs die Kenntnis der Sichtweite in Fahrtrichtung von besonderem Interesse ist, wird es in den meisten Fällen zweckmäßig sein, das Objekt in einem kegelförmigen Volumen auszuwählen, das in Fahrtrichtung vor dem Fahrzeug liegt.

Es kann sich jedoch auch als zweckmäßig erweisen, das Objekt in einem in Fahrtrichtung hinter dem Fahrzeug liegenden kegelförmigen Volumen zu wählen. Diese Vorgehensweise hat den Vorteil, daß zu dem Zeitpunkt, an dem das Objekt ausgewählt wird, sich dieses in einer geringen Entfernung von dem Fahrzeug befindet, in der der vom Fahrzeug aus meßbare Kontrast relativ stark ist. Mit zunehmender Entfernung schwindet dieser Kontrast. Die zweite Messung kann daher in einem relativ großen Abstand durchgeführt werden, der im wesentlichen durch die Fähigkeit eines an das Meßgerät angeschlossenen Bildanalysesystems begrenzt ist, das ausgewählte Objekt zu verfolgen. Bei Messung in Fahrtrichtung hingegen besteht das Problem, daß unter einer Vielzahl von kontrastschwachen Objekten, die zum Zeitpunkt der ersten Messung zur Auswahl stehen, nicht bekannt ist, welches von diesen weit vom Fahrzeug entfernt und objektiv kontraststark ist und somit ein geeignetes Meßobjekt darstellt.

Das Problem, ein geeignetes Objekt für die Kontrastmessung zu finden, stellt sich insbesondere dann, wenn die Sichtweite tatsächlich durch Nebel oder dergleichen beschränkt ist. Es kann sich daher als zweckmäßig erweisen, bei guten oder halbwegs guten Sichtverhältnissen jeweils ein Meßobjekt in Fahrtrichtung zu wählen, und, falls das Scheitern von Messungen in Fahrtrichtung auf schlechte Sichtverhältnisse schließen läßt, ein Meßobjekt entgegen der Fahrtrichtung zu verwenden.

Die gleiche vorteilhafte Wirkung kann bei Auswahl eines Objekts in Fahrtrichtung auch dadurch erreicht werden, daß an den zwei Meßpositionen jeweils ein Bild aufgezeichnet wird, daß das Objekt in dem jüngsten der Bilder ausgewählt wird, in dem es zwangsläufig am größten und kontraststärksten ist, und daß es in dem wenigstens einen älteren Bild identifiziert wird, um die Kontrastmessung durchzuführen.

Um die Meßgenauigkeit weiter zu verbessern, kann die Kontrastmessung an dem Objekt auch von drei oder mehr unterschiedlich weit von dem Objekt entfernten Meßpositionen aus durchgeführt werden, und die Sichtweite wird durch ein Anpassungsverfahren wie etwa das Verfahren der kleinsten Fehlerquadrate ermittelt.

Für die Durchführung des Verfahrens wird vorzugsweise ein Meßgerät mit einem CCD- oder CMOS-Bildsensor als ortsauflösender Bildsensor eingesetzt. Die Auswahl eines für eine Kontrastmessung geeigneten Objekts kann bei einem solchen Bildsensor durch Bilden eines Gradienten der erfaßten Lichtintensität über die Bildfläche des Sensors und Auswählen einer Region mit einem hohen Gradienten erfolgen.

Eine nichtlineare, vorzugsweise logarithmische Wandelkennlinie des Bildsensors vereinfacht die Auswertung der aufgezeichneten Bilder.

Weitere Merkmale und Vorteile der Erfindung ergeben sich aus der nachfolgenden Beschreibung von Ausführungsbeispielen mit Bezug auf die Figuren.

**Figuren**

Es zeigen:

Fig. 1a, 1b    eine typische Anwendungssituation des erfindungsgemäßen Verfahrens;

Fig. 2    den scheinbaren Kontrast eines Objekts als Funktion der Entfernung zwischen Objekt und Meßgerät;

Fig. 3    schematisch den Aufbau eines Meßgeräts zur Durchführung des erfindungsgemäßen Verfahrens;

Fig. 4    ein Flußdiagramm des Verfahrens in einer ersten Ausgestaltung; und

Fig. 5    ein Flußdiagramm des Verfahrens in einer zweiten Ausgestaltung.

**Beschreibung der Ausführungsbeispiele**

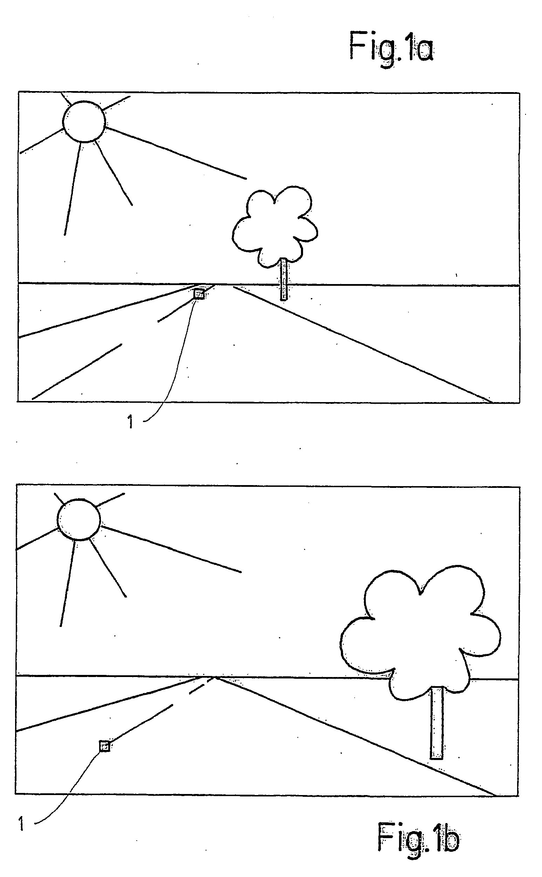

Figur 1 zeigt in ihren Teilen a und b eine typische Verkehrsszene aus Sicht des Fahrers eines Kraftfahrzeugs, gesehen in Fahrtrichtung. Die Szene ist zu zwei verschiedenen Zeitpunkten $t_1$ und $t_2$ dargestellt, wobei $t_2$ später ist als $t_1$. Als ein Objekt 1 für eine Kontrastmessung ist hier die Ecke einer Fahrbahnmarkierung mit ausgeprägtem hell-dunkel Kontrast ausgewählt. Das Objekt wird im Bild einer Kamera zum Zeitpunkt $t_1$ detektiert und vermessen. Es wird dann über einen gewissen Zeitraum im Bild verfolgt und zu einem späteren Zeitpunkt $t_2$ wird der Kontrast erneut gemessen.

Bei optimalen Sichtbedingungen sollten die Ergebnisse der Kontrastmessungen zum Zeitpunkt $t_1$ und $t_2$ gleich sein. Bei schlechter Sicht, z.B. wegen Nebel, Regen, Rauch oder dergleichen sollte der Kontrast zum Zeitpunkt $t_2$ größer sein als zum Zeitpunkt $t_1$. Auch bei Dunkelheit ist davon auszugehen, daß der Kontrast des Objekts 1 um so stärker ist, je näher es den Scheinwerfern des Fahrzeugs rückt.

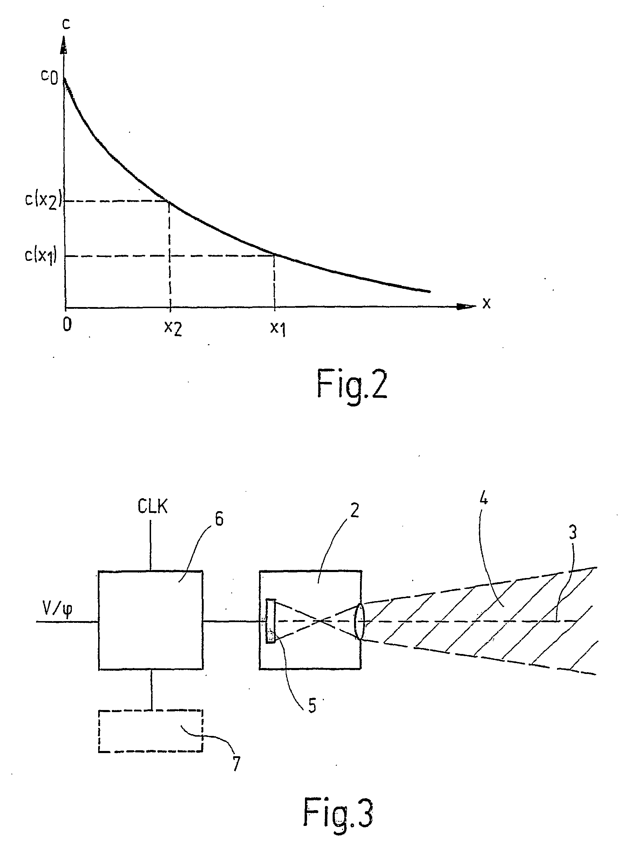

Figur 2 zeigt die Abhängigkeit des vom Fahrzeug aus meßbaren scheinbaren Kontrasts des Objekts 1 als Funktion der Entfernung x. Bei einer Entfernung $x = 0$ ist der gemessene Kontrast gleich dem tatsächlichen oder objektiven Kontrast $c_0$, d.h. dem Kontrast, der direkt an der Oberfläche des Objekts gegeben ist. Mit zunehmender Entfernung nimmt des scheinbare Kontrast c, d.h. der von fern meßbare, von der Trübung der Atmosphäre beeinflußte Kontrast exponentiell nach der Formel

$$c(x) = c_0 \ e^{-x/\delta}$$

ab, wobei $\delta$ als Sichtweite definiert werden kann. Wie man leicht aus der obigen Formel herleiten kann, kann die Sichtweite $\delta$ anhand von zwei Kontrastmessungen in beliebigen Entfernungen $x_1$ bzw. $x_2$ zum Objekt 1 wie folgt bestimmt werden.

$$\delta = \frac{x_2 - x_1}{\ln\left(c(x_1)/c(x_2)\right)} = \frac{x_2 - x_1}{\ln(c(x_1)) - \ln(c(x_2))}$$

Der erhaltene Meßwert der Sichtweite $\delta$ ist also völlig unabhängig von dem realen Kontrast $c_0$. Für eine korrekte Auswertung der gemessenen Kontrastwerte ist folglich keinerlei Information über die Art des für die Messung ausgewählten Objekts erforderlich.

Figur 3 zeigt stark schematisiert ein Blockdiagramm der Vorrichtung zur Durchführung des erfindungsgemäßen Verfahrens. Die Vorrichtung umfaßt eine Kamera 2, deren optische Achse 3 im wesentlichen parallel zur Fahrtrichtung des Fahrzeugs ausgerichtet ist. Das Blickfeld der Kamera definiert ein kegelförmiges Volumen 4, das in der Figur als schraffierte Fläche dargestellt ist. Die Kamera 2 kann z.B. in einem vorderen oder hinteren Stoßfänger des Fahrzeugs oder in unmittelbarer Nachbarschaft eines Scheinwerfers angeordnet sein. Die Anordnung in der Nähe des Scheinwerfers hat den zusätzlichen Vorteil, daß das Blickfeld der Kamera weitgehend mit dem Lichtkegel des Scheinwerfers zusammenfallen kann, was eine Messung der subjektiven Sichtweite des Fahrers bei Dunkelheit erleichtert.

Die Kamera umfaßt als bildaufzeichnendes Element einen CCD- oder CMOS-Sensor 5 mit einer Vielzahl von zu einer Matrix von Zeilen und Spalten angeordneten Pixeln. Die Pixel weisen eine nichtlineare Wandelkennlinie auf.

Einer ersten Variante zufolge kann diese Kennlinie an die Lichtempfindlichkeit des menschlichen Auges angepaßt sein, so daß das von jedem einzelnen Pixel gelieferte Signal proportional zu dem von einem menschlichen Auge für den entsprechenden Bildpunkt empfundenen Helligkeitswert ist.

Einer zweiten Variante zufolge weisen die Pixel eine logarithmische Wandelkennlinie auf. Diese Variante vereinfacht die Kontrastmessung, da der Kontrast zwischen zwei unterschiedlich hellen Stellen eines Objekts, d.h. das Verhältnis der von diesen zwei Stellen abgestrahlten Lichtintensitäten, der Differenz der Signale entspricht, die von den entsprechenden Pixeln des Bildsensors 5 geliefert werden. D.h., die Messung eines Kontrastes erfordert in einer an den Bildsensor 5 mit logarithmischer Wandelkennlinie angeschlossenen Verarbeitungsschaltung lediglich die Bildung einer Differenz, aber keine rechenaufwendige Division.

Bei der Vorrichtung der Figur 3 ist eine Recheneinheit 6 an den Bildsensor 5 angeschlossen und empfängt Bilder von diesem.

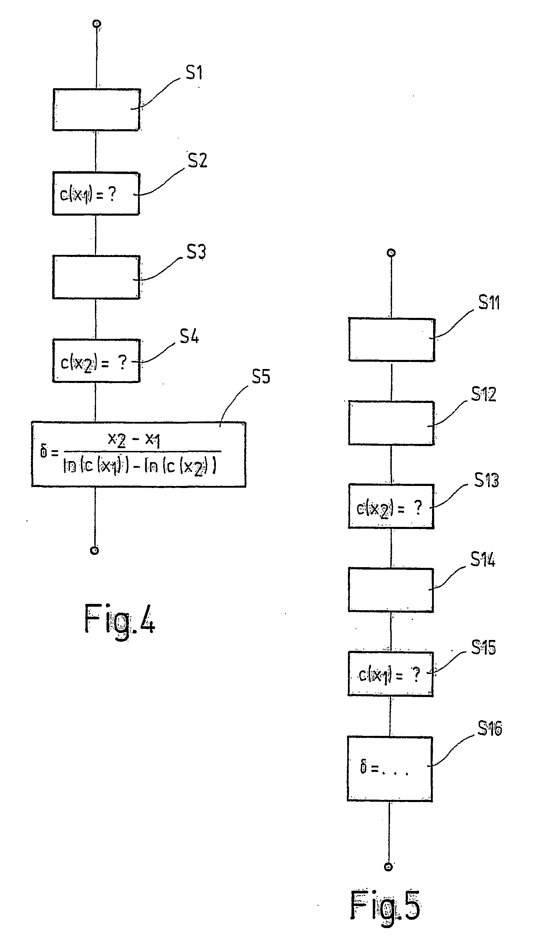

Die Verarbeitung der Bilder in der Recheneinheit 6 kann auf unterschiedliche Weise erfolgen. Ein erstes, in Figur 4 dargestelltes Verfahren sieht in einem ersten Schritt die Auswahl eines Objekts in einem von dem Bildsensor 5 gelieferten Bild (S1) und eine Messung des Kontrastes $c(x_1)$ des Objektes (S2) vor, wobei die Entfernung $x_1$ zwischen der Kamera und dem Objekt zu diesem Zeitpunkt nicht bekannt ist. Im nächsten Schritt S3 wird das Objekt in von dem Bildsensor 5 in schneller Folge gelieferten Bildern eine Zeitlang verfolgt, während sich das Fahrzeug weiter bewegt. Der nächste Schritt S4 beinhaltet die neuerliche Messung eines Kontrastwertes $c(x_2)$ des Objekts. Der während der Verfolgung des Objekts vom Fahrzeug zurückgelegte Weg $(x_1 - x_2)$ wird von der Rechenschaltung durch Integrieren eines beispielsweise vom Fahrzeugtachometer zugeführten Geschwindigkeitssignals über die Zeit mit Hilfe eines externen Zeittaktsignals CLK ermittelt. Die Ermittlung des Weges kann auch erfolgen durch Verfolgen der Änderung eines an einem Rad des Fahrzeugs abgegriffenen Drehwinkelsignals $\phi$ zwischen den zwei Messungen. Anschließend wird die Sichtweite $\delta$ nach der oben angegebenen Formel berechnet.

Diese "elementare" Variante des Verfahrens kann in vielfacher Hinsicht verfeinert werden. Eine Möglichkeit besteht z.B. darin, nicht nur zwei Kontrastwerte für das ausgewählte Objekt zu messen, sondern eine Mehrzahl von Kontrastwerten, so daß die in Figur 2 gezeigte Kurve unter Verwendung einer Vielzahl von Meßwerten nach dem Verfahren der kleinsten Quadrate angepaßt und $\delta$ so mit hoher Genauigkeit bestimmt werden kann.

Ferner ist es möglich, nicht nur ein Objekt zu wählen, sondern in jedem von dem Bildsensor 5 gelieferten Bild Kontrastmessungen an einer Vielzahl von Objekten vorzunehmen, um so über eine Vielzahl an jeweils unterschiedlichen Objekten aufgenommenen Meßwerten der Sichtweite $\delta$ zu verfügen.

Um geeignete Objekte für eine Messung zu finden, muß die Recheneinheit 6 diejenigen Bereiche eines von dem Sensor 5 gelieferten Bildes ausfindig machen, die einen vorgegebenen Mindestkontrast erreichen.

Falls das Fahrzeug sich tatsächlich durch Nebel bewegt, kann es vorkommen, daß Objekte erst ab einer geringen Entfernung vom Fahrzeug diesen Mindestkontrast erreichen. Dann kann die erste Kontrastmessung erst in geringem Abstand vom Fahrzeug durchgeführt werden, und die Zeit für eine zweite Messung kann knapp werden, so daß viele Meßversuche scheitern können. Diesem Problem kann begegnet werden, indem das Blickfeld der Kamera 2 nicht in Fahrtrichtung sondern entgegengesetzt zur Fahrtrichtung ausgerichtet wird, oder, besser noch, indem der Recheneinheit 6 zwei Kameras zugeordnet werden, von denen eine in Fahrtrichtung und die andere in Gegenrichtung blickt, so daß die Recheneinheit 6, falls Messungen in Fahrtrichtung schwierig sein sollten, auf Messungen mit Hilfe der entgegengesetzt zur Fahrtrichtung ausgerichteten Kamera umschalten kann. Die entgegengesetzt zur Fahrtrichtung ausgerichtete Kamera kann nämlich für die Kontrastmessung aus allen in ihrem Blickfeld befindlichen Objekten das jeweils kontraststärkste auswählen, weil dieses das Objekt ist, was auch mit zunehmender Entfernung des Fahrzeugs von dem Objekt am längsten sichtbar und für eine Messung geeignet bleiben wird.

Einer vorteilhaften Weiterentwicklung zufolge ist der Recheneinheit 6 ein Bildspeicher 7 zugeordnet, der in Figur 3 gestrichelt dargestellt ist, und der dazu dient, von dem Bildsensor 5 gelieferte Bilder für eine begrenzte Zeitspanne zu puffern. Das von dieser weiterentwickelten Vorrichtung ausgeführte Verfahren wird mit Bezug auf Figur 5 erläutert.

In Schritt S11 wird hier zunächst ein vom Bildsensor 5 geliefertes Bild ohne weitere Bearbeitung in dem Bildspeicher 7 zwischengespeichert. Nachdem das Fahrzeug einen gegebenen Weg zurückgelegt hat und der Bildsensor 5 ein neues Bild geliefert hat, wird in diesem jüngeren Bild ein geeignetes Objekt für die Kontrastmessung gewählt (Schritt S12) und deren Kontrast gemessen (Schritt S13).

Bei diesem Objekt kann es sich um die kontraststärkste Region des jüngeren Bildes handeln, d.h. die Messung des Kontrastes kann der Auswahl des Objektes auch vorangehen. Insbesondere bei Verwendung eines Bildsensors 5 mit logarithmischer Wandelkennlinie ist die Ermittlung des kontraststärksten Objekts mit geringem Rechenaufwand möglich.

Der Kontrast $c(x_2)$ des Objekts wird zwischengespeichert, und in Schritt S14 wird das ausgewählte Objekt in dem älteren Bild identifiziert. Diese Identifikation kann durch Rückverfolgen des Objekts mit Hilfe einer Vielzahl von ebenfalls in dem Bildspeicher 7 aufgezeichneten, zwischenzeitlich erzeugten Bildern erfolgen; es können auch Kreuzkorrelationstechniken eingesetzt werden.

Nach Ermittlung des Objekts in dem älteren Bild wird sein Kontrast $c(x_1)$ in diesem Bild ermittelt (Schritt S15), und die Sichtweite wie oben angegeben berechnet (Schritt S16).

Dieses Verfahren ist auch bei geringen Sichtweiten ohne weiteres anwendbar, weil das in dem jüngeren Bild ausgewählte Objekt in dem älteren auch dann ohne weiteres identifizierbar sein kann, wenn es nur noch einen sehr geringen Kontrast aufweist.

Auch bei dieser Ausgestaltung des Verfahrens besteht selbstverständlich die Möglichkeit, Messungen an einer Mehrzahl von Objekten gleichzeitig durchzuführen, oder mehr als zwei Kontrastmeßwerte für eine Objekt zu erzeugen und auszuwerten.

## Patentansprüche

1. Verfahren zur Sichtweitenbestimmung mit einem in einem fahrenden Kraftfahrzeug angeordneten Messgerät mit den Schritten

   - Messen eines Kontrastes $(c(x_1), c(x_2))$ an einem Objekt (1) von wenigstens zwei unterschiedlich weit von dem Objekt (1) entfernten Messpositionen $(x_1, x_2)$ des Messgerätes aus mit folgenden Schritten: in einem ersten Schritt Auswahl des Objektes (1) in einem von einem Bildsensor (5) des Messgerätes gelieferten Bild und Messung des Kontrastes $(c(x_1))$ des Objektes (1) im gelieferten Bild, im nächsten Schritt Verfolgung des Objektes (1) in von dem Bildsensor (5) gelieferten Bildern, während sich das Kraftfahrzeug weiter bewegt und in einem nächsten Schritt neuerliche Messung des Kontrastes $(c(x_2))$ des Objektes (1).
   - Umrechnen der Änderung der gemessenen Kontrastwerte in eine Sichtweite (δ), wobei die Umrechnung anhand des Verhältnisses der gemessenen Kontrastwerte und der Differenz der Entfernungen der Messpositionen vom Objekt (1) erfolgt.

2. Verfahren nach Anspruch 1, **dadurch gekennzeichnet, dass** es zur Messung der Sichtweite eines Fahrers in dem fahrenden Kraftfahrzeug eingesetzt wird.

3. Verfahren nach einem der vorhergehenden Ansprüche, **dadurch gekennzeichnet, dass** die Entfernung des Messgerätes vom Objekt (1) an jeder Messposition absolut, vorzugsweise durch Triangulation, gemessen wird.

4. Verfahren nach Anspruch 2, **dadurch gekennzeichnet, dass** die Differenz der Entfernungen $(x_1, x_2)$ der Messpo-sitionen vom Objekt (1) durch Messen des von dem Kraftfahrzeug zwischen den zwei Messpositionen zurückgelegten Weges ermittelt wird.

5. Verfahren nach Anspruch 4, **dadurch gekennzeichnet, dass** der von dem Kraftfahrzeug zurückgelegte Weg anhand eines im Fahrzeug vorhandenen Geschwindigkeitssignals (V) und einer Zeitreferenz (CLK) ermittelt wird.

6. Verfahren nach Anspruch 4, **dadurch gekennzeichnet, dass** der von dem Kraftfahrzeug zurückgelegte Weg durch Messen des von einem Rad des Fahrzeugs zwischen den Messpositionen zurückgelegten Drehwinkels (Φ) ermittelt wird.

7. Verfahren nach einem der Ansprüche 2 bis 6, **dadurch gekennzeichnet, dass** das Objekt jeweils innerhalb eines kegelförmigen Volumens (4) mit vorgegebenem Öffnungswinkel ausgewählt wird, an dessen Scheitel sich das Fahrzeug befindet und dessen Achse (3) der Bewegungsrichtung des Fahrzeugs entspricht.

8. Verfahren nach Anspruch 7, **dadurch gekennzeichnet, dass** das Objekt in einem in Fahrtrichtung vor dem Fahrzeug liegenden kegelförmigen Volumen (4) ausgewählt wird.

9. Verfahren nach Anspruch 7, **dadurch gekennzeichnet, dass** das Objekt in einem in Fahrtrichtung hinter dem Fahrzeug liegenden kegelförmigen Volumen ausgewählt wird.

10. Verfahren nach einem der Ansprüche 7 bis 9, **dadurch gekennzeichnet, dass** das Objekt in einem in Fahrtrichtung hinter dem Fahrzeug liegenden kegelförmigen, Volumen ausgewählt wird, wenn eine Sichtweitenmessung an einem in Fahrtrichtung vor dem Fahrzeug liegenden Objekt scheitert.

**11.** Verfahren nach einem der vorhergehenden Ansprüche, **dadurch gekennzeichnet, dass** eine Kontrastmessung an dem Objekt (1) von wenigstens drei unterschiedlich weit von dem Objekt entfernten Messpositionen aus durchgeführt wird und die Sichtweite (5) durch ein Anpassungsverfahren ermittelt wird.

**12.** Verfahren nach einem der vorhergehenden Ansprüche, **dadurch gekennzeichnet, dass** der erhaltene Messwert der Sichtweite zum Festlegen einer Höchstgeschwindigkeit eines Kraftfahrzeugs eingesetzt wird.

**13.** Messgerät eines Kraftfahrzeuges, wobei das Messgerät eine Kamera (2) und eine Recheneinheit (6) aufweist, wobei die Kamera (2) einen CCD- oder CMOS-Bildsensor (5) umfasst, wobei das Messgerät die Schritte durchführt:

- Messen eines Kontrastes ($c(x_1)$, $c(x_2)$) an einem Objekt (1) von wenigstens zwei unterschiedlich weit von dem Objekt (1) entfernten Messpositionen ($x_1$, $x_2$) des Messgerätes aus mit folgenden Schritten: in einem ersten Schritt Auswahl des Objektes (1) in einem von dem Bildsensor (5) gelieferten Bild und Messung des Kontrastes ($c(x_1)$) des Objektes (1) im gelieferten Bild, im nächsten Schritt Verfolgung des Objektes (1) in von dem Bildsensor (5) gelieferten Bildern, während sich das Kraftfahrzeug weiter bewegt und in einem nächsten Schritt neuerliche Messung des Kontrastes ($c(x_2)$) des Objektes (1),
- Umrechnen der Änderung der gemessenen Kontrastwerte in eine Sichtweite ($\delta$), wobei die Umrechnung anhand des Verhältnisses der gemessenen Kontrastwerte und der Differenz der Entfernungen der Messpositionen vom Objekt erfolgt.

**14.** Messgerät nach Anspruch 13, **dadurch gekennzeichnet, dass** der Bildsensor (5) eine nichtlineare, vorzugsweise eine logarithmische Wandelkennlinie aufweist.

**15.** Messgerät nach Anspruch 13 oder 14, **gekennzeichnet durch** einen Bildspeicher (7) zum zeitweiligen Puffern vom Bildsensor (5) gelieferten Bildern.

**16.** Verfahren zur Sichtweitenbestimmung mit einem in einem fahrenden Kraftfahrzeug angeordneten Messgerät mit den Schritten

- Messen eines Kontrastes ($c(x_1)$, $c(x_2)$) an einem Objekt (1) von wenigstens zwei unterschiedlich weit von dem Objekt (1) entfernten Messpositionen ($x_1$, $x_2$) des Messgerätes aus, wobei an den wenigstens zwei Messpositionen ($x_1$, $x_2$) jeweils ein Bild aufgezeichnet wird, wobei das Objekt (1) in dem jüngsten der Bilder ausgewählt (S12) und der Kontrast ($c(x_2)$) des Objektes (1) gemessen wird, und wobei das Objekt (1) in dem wenigstens einen älteren, in einem Bildspeicher (7) zwischengespeicherten Bild identifiziert (S14) und der Kontrast ($c(x_1)$) des Objektes (1) in diesem älteren Bild ermittelt wird (S15),
- Umrechnen der Änderung der gemessenen Kontrastwerte in eine Sichtweite ($\delta$), wobei die Umrechnung anhand des Verhältnisses der gemessenen Kontrastwerte und der Differenz der Entfernungen der Messpositionen vom Objekt erfolgt.

**17.** Messgerät eines Kraftfahrzeuges, wobei das Messgerät eine Kamera (2), eine Recheneinheit (6) und einen Bildspeicher (7) aufweist, wobei die Kamera (2) einen CCD- oder CMOS-Bildsensor (5) umfasst, wobei das Messgerät die Schritte durchführt:

- Messen eines Kontrastes ($c(x_1)$, $c(x_2)$) an einem Objekt (1) von wenigstens zwei unterschiedlich weit von dem Objekt (1) entfernten Messpositionen ($x_1$, $x_2$) des Messgerätes aus, wobei an den wenigstens zwei Messpositionen ($x_1$, $x_2$) jeweils ein Bild aufgezeichnet wird, wobei das Objekt (1) in dem jüngsten der Bilder ausgewählt (S12) und der Kontrast ($c(x_2)$) des Objektes (1) gemessen wird, und wobei das Objekt (1) in dem wenigstens einen älteren, in dem Bildspeicher (7) zwischengespeicherten Bild identifiziert (S14) und der Kontrast ($c(x_1)$) des Objektes (1) in diesem älteren Bild ermittelt wird (S15),
- Umrechnen der Änderung der gemessenen Kontrastwerte in eine Sichtweite ($\delta$), wobei die Umrechnung anhand des Verhältnisses der gemessenen Kontrastwerte und der Differenz der Entfernungen der Messpositionen vom Objekt erfolgt.

**EP 1 303 768 B1**

**Claims**

1. Method for determining visual range with the aid of a measuring instrument arranged in a moving motor vehicle, having the steps of

   - measuring a contrast ($c(x_1)$, $c(x_2)$) at an object (1) from at least two measurement positions ($x_1$, $x_2$) of the measuring instrument which are at different distances from the object (1), having the following steps: in a first step, selecting the object (1) in an image supplied by an image sensor (5) of the measuring instrument, and measuring the contrast ($c(x_1)$) of the object (1) in the supplied image, in a next step, tracking the object (1) in images supplied by the image sensor (5) while the motor vehicle moves further, and in a next step, renewed measurement of the contrast ($c(x_2)$) of the object (1), and
   - converting the change in the measured contrast values into a visual range ($\delta$), the conversion being performed with the aid of the ratio of the measured contrast values and the difference between the distances of the measuring positions from the object (1).

2. Method according to Claim 1, **characterized in that** it is used to measure the visual range of a driver in the moving motor vehicle.

3. Method according to one of the preceding claims, **characterized in that** the distance of the measuring instrument from the object (1) is measured absolutely at each measuring position, preferably by triangulation.

4. Method according to Claim 2, **characterized in that** the difference between the distances ($x_1$, $x_2$) of the measurement positions from the object (1) is determined by measuring the path covered by the motor vehicle between the two measurement positions.

5. Method according to Claim 4, **characterized in that** the path covered by the motor vehicle is determined with the aid of a speed signal (V) present in the vehicle, and of a time reference (CLK).

6. Method according to Claim 4, **characterized in that** the path covered by the motor vehicle is determined by measuring the angle of rotation ($\Phi$) covered by a wheel of the vehicle between the measurement positions.

7. Method according to one of Claims 2 to 6, **characterized in that** the object is respectively selected within a conical volume (4) of prescribed aperture angle at the vertex of which the vehicle is located, and whose axis (3) corresponds to the movement direction of the vehicle.

8. Method according to Claim 7, **characterized in that** the object is selected in a conical volume (4) lying ahead of the vehicle in the driving direction.

9. Method according to Claim 7, **characterized in that** the object is selected in a conical volume lying behind the vehicle in the driving direction.

10. Method according to one of Claims 7 to 9, **characterized in that** the object is selected in a conical volume lying behind the vehicle in the driving direction when a visual range measurement fails at an object lying ahead of the vehicle in the driving direction.

11. Method according to one of the preceding claims, **characterized in that** a contrast measurement is carried out at the object (1) from at least three measurement positions at different distances from the object, and the visual range (5) is determined by means of an adaptation method.

12. Method according to one of the preceding claims, **characterized in that** the measured value obtained for the visual range is used to fix a top speed of a motor vehicle.

13. Measuring instrument of a motor vehicle, the measuring instrument having a camera (2) and an arithmetic logic unit (6), the camera (2) comprising a CCD or CMOS image sensor (5), the measuring instrument carrying out the steps of:

    - measuring a contrast ($c(x_1)$, $c(x_2)$) at an object (1) from at least two measurement positions ($x_1$, $x_2$) of the measuring instrument which are at different distances from the object (1), having the following steps: in a first step, selecting the object (1) in an image supplied by the image sensor (5), and measuring the contrast ($c(x_1)$)

of the object (1) in the supplied image, in a next step, tracking the object (1) in images supplied by the image sensor (5) while the motor vehicle moves further, and in a next step, renewed measurement of the contrast ($c(x_2)$) of the object (1), and
- converting the change in the measured contrast values into a visual range ($\delta$), the conversion being performed with the aid of the ratio of the measured contrast values and the difference between the distances of the measuring positions from the object (1) .

**14.** Measuring instrument according to Claim 13, **characterized in that** the image sensor (5) has a nonlinear, preferably a logarithmic conversion characteristic.

**15.** Measuring instrument according to Claim 13 or 14, **characterized by** an image memory (7) for temporarily buffering images supplied by the image sensor (5).

**16.** Method for determining visual range with the aid of a measuring instrument arranged in a moving motor vehicle, having the steps of

- measuring a contrast ($c(x_1)$, $c(x_2)$) at an object (1) from at least two measurement positions ($x_1$, $x_2$) of the measuring instrument which are at different distances from the object (1), an image respectively being recorded at the at least two measurement positions ($x_1$, $x_2$), the object (1) being selected in the most recent of the images (S12), and the contrast ($c(x_2)$) of the object (1) being measured, and the object (1) being identified (S14) in the at least one older image buffered in an image memory (7), and the contrast ($c(x_1)$) of the object (1) being determined (S15) in this older image,
- converting the change in the measured contrast values into a visual range ($\delta$), the conversion being performed with the aid of the ratio of the measured contrast values and the difference between the distances of the measuring positions from the object.

**17.** Measuring instrument of a motor vehicle, the measuring instrument having a camera (2), an arithmetic logic unit (6) and an image memory (7), the camera (2) comprising a CCD or CMOS image sensor (5), the measuring instrument carrying out the steps of:

- measuring a contrast ($c(x_1)$, $c(x_2)$) at an object (1) from at least two measurement positions ($x_1$, $x_2$) of the measuring instrument which are at different distances from the object (1), an image respectively being recorded at the at least two measurement positions ($x_1$, $x_2$), the object (1) being selected in the most recent of the images (S12), and the contrast ($c(x_2)$) of the object (1) being measured, and the object (1) being identified (S14) in the at least one older image buffered in the image memory (7), and the contrast ($c(x_1)$) of the object (1) being determined (S15) in this older image,
- converting the change in the measured contrast values into a visual range ($\delta$), the conversion being performed with the aid of the ratio of the measured contrast values and the difference between the distances of the measuring positions from the object.

**Revendications**

**1.** Procédé de détermination de la distance de visibilité à l'aide d'un appareil de mesure installé dans un véhicule automobile en mouvement, selon lequel :

on mesure le contraste ($c(x_1)$, $c(x_2)$) d'un objet (1) pour au moins deux positions de mesure ($x_1$, $x_2$) de l'appareil de mesure à une distance différente de l'objet (1),
comprenant les étapes suivantes :

- dans une première étape, on sélectionne l'objet (1) dans une image fournie par un capteur d'images (5) de l'appareil de mesure et on mesure le contraste ($c(x_1)$) de l'objet (1) de l'image fournie,
- dans l'étape suivante, on poursuit l'objet (1) dans les images fournies par le capteur d'images (5) pendant que le véhicule automobile continue à se déplacer et
- dans une autre étape suivante, on refait la mesure du contraste ($c(x_2)$), de l'objet (1), puis
- on convertit la variation des valeurs de contraste mesurées en une distance de visibilité ($\delta$), la conversion se faisant à l'aide du rapport entre les valeurs de contraste mesurées et la différence des distances des positions de mesure par rapport à l'objet (1).

**2.** Procédé selon la revendication 1,
**caractérisé en ce qu'**
il est utilisé pour mesurer la distance de visibilité du conducteur d'un véhicule automobile en mouvement.

**3.** Procédé selon l'une des revendications précédentes,
**caractérisé en ce qu'**
on mesure la distance entre l'appareil de mesure et l'objet (1) pour chaque position de mesure de façon absolue, de préférence par triangulation.

**4.** Procédé selon la revendication 2,
**caractérisé en ce qu'**
on détermine la différence entre les distances ($x_1$, $x_2$) des positions de mesure par rapport à l'objet (1) par la mesure du trajet parcouru par le véhicule automobile entre les deux positions de mesure.

**5.** Procédé selon la revendication 4,
**caractérisé en ce qu'**
on détermine le trajet parcouru par le véhicule automobile à l'aide d'un signal de vitesse (V) disponible dans le véhicule et d'une référence de temps (CLK).

**6.** Procédé selon la revendication 4,
**caractérisé en ce qu'**
on détermine le trajet parcouru par le véhicule automobile par la mesure de l'angle de rotation ($\Phi$) parcouru entre les positions de mesure par une route du véhicule automobile.

**7.** Procédé selon l'une des revendications 2 à 6,
**caractérisé en ce qu'**
on sélectionne chaque objet dans un volume (4) de forme conique avec un angle d'ouverture prédéfini dont le sommet est occupé par le véhicule et dont l'axe (3) correspond à la direction de déplacement du véhicule.

**8.** Procédé selon la revendication 7,
**caractérisé en ce qu'**
on sélectionne l'objet dans un volume conique (4) situé dans la direction de déplacement à l'avant du véhicule.

**9.** Procédé selon la revendication 7,
**caractérisé en ce qu'**
on sélectionne l'objet dans un volume conique situé à l'arrière du véhicule selon sa direction de déplacement.

**10.** Procédé selon l'une des revendications 7 à 9,
**caractérisé en ce qu'**
on sélectionne l'objet dans un volume conique situé derrière le véhicule, selon sa direction de déplacement, si une mesure de distance de portée effectuée sur un objet situé devant le véhicule dans le sens de déplacement de celui-ci a échoué.

**11.** Procédé selon l'une des revendications précédentes,
**caractérisé en ce qu'**
on effectue une mesure de contraste sur un objet (1) dans au moins trois positions de mesure éloignées d'une distance différente de l'objet et on détermine la portée (5) par un procédé d'adaptation.

**12.** Procédé selon l'une des revendications précédentes,
**caractérisé en ce qu'**
on utilise la valeur de mesure obtenue pour la distance de portée pour fixer une vitesse maximale pour le véhicule automobile.

**13.** Appareil de mesure d'un véhicule automobile selon lequel l'appareil de mesure comporte une caméra (2) et une unité de calcul (6),
la caméra (2) ayant un capteur d'images (5) de type CCD ou CMOS,
l'appareil de mesure exécutant les étapes suivantes :

- mesure du contraste (($c(x_1)$, $c(x_2)$)) d'un objet (1) à partir d'au moins deux positions de mesure ($x_1$, $x_2$) de l'appareil de mesure, à une distance différente de l'objet (1), en procédant selon les étapes suivantes :
- dans une première étape, on sélectionne l'objet (1) dans une image fournie par le capteur d'images (5) et on mesure le contraste ($c(x_1)$), de l'objet (1) dans l'image fournie,
- dans l'étape suivante, on poursuit l'objet (1) dans les images fournies par le capteur d'images (5) pendant que le véhicule automobile continue à se déplacer, et
- dans une étape ultérieure, on refait la mesure du contraste ($c(x_2)$) de l'objet (1), puis
- on convertit la variation des valeurs de contraste mesurées en une distance de visibilité ($\delta$), la conversion se faisant à l'aide du rapport entre les valeurs de contraste mesurées et la différence des distances des positions de mesure par rapport à l'objet.

**14.** Appareil de mesure selon la revendication 3,
**caractérisé en ce que**
le capteur d'images (5) présente une caractéristique de conversion non linéaire, de préférence une caractéristique de conversion logarithmique.

**15.** Appareil de mesure selon la revendication 13 ou la revendication 14,
**caractérisé par**
une mémoire d'images (7) pour stocker provisoirement les images fournies par le capteur d'images (5).

**16.** Procédé de détermination de la distance de visibilité à l'aide d'un appareil de mesure équipant un véhicule automobile en mouvement, comprenant les étapes suivantes :

- mesure du contraste (($c(x_1)$, $c(x_2)$)) d'un objet (1) à partir d'au moins deux positions de mesure ($x_1$, $x_2$) de l'appareil de mesure, ces positions étant éloignées d'une distance différente de l'objet (1), et pour au moins ces deux positions de mesure ($x_1$, $x_2$) on enregistre chaque fois une image,
l'objet (1) étant sélectionné dans l'image la plus récente (S12) et on mesure le contraste ($c(x_2)$), de l'objet (1), et on identifie l'objet (1) dans au moins une image plus ancienne enregistrée de façon provisoire dans une mémoire d'images (7) (S14) et on détermine le contraste ($c(x_1)$), de l'objet (1) dans cette image plus ancienne (S15),
- conversion de la variation des valeurs de contraste mesurées en une distance de visibilité ($\delta$), et pour la conversion on utilise le rapport des valeurs de contraste mesurées et la différence des distances des positions de mesure par rapport à l'objet.

**17.** Appareil de mesure équipant un véhicule automobile, cet appareil de mesure comprenant une caméra (2), une unité de calcul (6) et une mémoire d'images (7),
la caméra (2) ayant un capteur d'images (5) de type CCD ou CMOS,
l'appareil de mesure effectuant les étapes suivantes :

- mesure du contraste (($c(x_1)$, $c(x_2)$)) d'un objet (1) à partir d'au moins deux positions de mesure ($x_1$, $x_2$) de l'appareil de mesure, éloignées d'une distance différente de l'objet (1), et on enregistre chaque fois une image au moins pour les deux positions de mesure ($x_1$, $x_2$),
- sélection de l'objet (1) dans l'image la plus récente (S12) et mesure du contraste ($c(x_2)$) de l'objet (1),
- identification de l'objet (1) dans au moins une image plus ancienne enregistrée de façon intermédiaire dans la mémoire d'images (7) (S14) et détermination du contraste ($c(x_1)$) de l'objet (1) dans cette image plus ancienne (S15),
- conversion de la variation des valeurs de contraste mesurées, en une distance de visibilité ($\delta$), la conversion se faisant à l'aide du rapport des valeurs de contraste mesurées et de la différence des distances des positions de mesure par rapport à l'objet.

## Fig.1a

## Fig.1b

Fig.2

Fig.3

$$\delta = \frac{x_2 - x_1}{\ln(c(x_1)) - \ln(c(x_2))}$$

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0687594 B1
- JP 631887741 B

- EP 0691534 A1

**In der Beschreibung aufgeführte Nicht-Patentliteratur**

- **DEAN POMERLEAU.** Visibility estimation from a moving vehicle using the ralph vision system. *IEEE,* 1998